# EUROPEAN PATENT APPLICATION

(11) **EP 1 800 601 A1**
(43) Date of publication of application: **27.06.2007**
(21) Application number: 05751563.7
(22) Date of filing: 14.06.2005
(51) Int. Cl.: A61B 5/117, G06T 1/00, G06T 7/00

(54) **LIVING BODY DETERMINATION DEVICE, AUTHENTICATION DEVICE USING THE DEVICE, AND LIVING BODY DETERMINATION METHOD**

(30) Priority: 03.08.2004 JP 2004226508
(71) Applicant: MATSUSHITA ELECTRIC INDUSTRIAL CO., LTD., Osaka 571-8501 (JP)
(72) Inventor: TSUKAHARA, Shinichi, Yokohama-shi, Kanagawa 240-0051 (JP)
(74) Representative: Grünecker, Kinkeldey, Stockmair & Schwanhäusser Anwaltssozietät
(86) International application number: PCT/JP2005/010849
(87) International publication number: WO 2006/013678

(57) **Abstract**

A biometric identification device, which identifies whether a photographic subject is a living eye or not, includes a photographing part for photographing an image of the photographic subject; a light source for irradiating light to the object at an angle different from a photographing angle at which the photographing part photographs the photographic subject; and a partial light patch detection part for detecting a partial light patch on the photographic subject from an image photographed by the photographing part. The biometric identification device identifies whether the photographic subject is a living eye or not based on whether the partial light patch detection part has detected a partial light patch or not.

## Description

### TECHNICAL FIELD

The present invention relates to a biometric identification device which identifies whether an object is a living thing or not, an authentication device using it, and a biometric identification method.

### BACKGROUND ART

In recent years, authentication systems which perform user authentication by using so-called biometrics information as authentication information have become commercially practical. The biometrics information, which is unique to each person, includes fingerprint patterns, face patterns, blood vessel patterns, eye iris patterns, etc.

In particular, the so-called iris recognition systems are widely in practice in sites requiring a high security level such as banking facilities and airports because of their high reliability including a low false rejection rate and a low false acceptance rate (see, e.g. Japanese Patent No. 3307936). In the iris recognition systems, a user is authenticated as follows: the user's eye is photographed (hereinafter, eye image); the iris area in the eye image is encoded to form authentication information; and the authentication information is compared and collated with the user's authentication information previously registered (hereinafter, registered authentication information).

The iris recognition systems have the risk of identity theft in which someone impersonating a legitimate user (hereinafter, a fraud) is fraudulently authenticated as a registered user by photographing the iris pattern of a registered user and using its printed picture (hereinafter, counterfeit).

In order to eliminate this risk, various techniques have been proposed so far. For example, there is a biometric identification technique in which a living eye is distinguished from a counterfeit by irradiating light to the photographic subject in the same direction as the optical axis of the camera which photographs the subject, and then measuring the intensity of the light reflected from the photographic subject so as to use the measured intensity. In this technique, when the photographic subject is a living eye, it has the phenomenon of receiving high-intensity reflected light from the retina (the so-called red eye phenomenon). By using this phenomenon, when the measured light intensity is higher than a predetermined threshold value, the photographic subject is determined to be a human eye (See, e.g. the pamphlet (2001) of International Publication No. WO01/01329).

However, in this technique, the light must be irradiated in the same direction as the angle of the optical axis of the camera which photographs the subject, so that the direction of the light emitted from the light source must be changed. Therefore, the biometric identification device is required to have an optical component such as a half mirror, thus making it difficult to mount the device onto a miniature authentication device.

### SUMMARY OF THE INVENTION

The present invention, which has been contrived in view of the aforementioned problems, has an object of providing a biometric identification device which does not need to have an optical component such as a half mirror so as to be able to be mounted on a miniature authentication device, an authentication device using it, and a biometric identification method.

In order to solve the problems, the biometric identification device of the present invention is a biometric identification device for identifying whether an object is a living eye or not, comprising: a photographing part for photographing the object; a light irradiation part for irradiating light to the object at an angle different from a photographing angle at which the photographing part photographs the object; a partial light patch detection part for detecting a partial light patch on the object from an image photographed by the photographing part; and an information output part for outputting information indicative of whether the object is a living eye or not based on whether the partial light patch detection part has detected a partial light patch from the object.

This structure can provide a biometric identification device which does not need to provide an optical component such as a half mirror so as to be able to be mounted on a miniature authentication device just by irradiating light to an object to be identified so as to photograph an image of the object and then determining whether the image contains a partial light patch or not.

The information output part may output the information indicative of that the object is a living eye when the partial light patch detection part has detected a partial light patch on the object.

This structure makes it possible to identify that the object is a living eye when the partial light patch has been detected. Consequently, the biometric identification device has security high enough to use the photographed image for post processing such as authentication.

The photographing part may photograph a first image while the object is irradiated by the light irradiation part, and a second image while the object is not irradiated by the light irradiation part; and the partial light patch detection part may compare the first image and the second image, thereby detecting the partial light patch on the object from the image photographed by the photographing part.

This structure can perform biometric identification just by comparing the image photographed while the object is exposed to light and the image photographed while the object is not exposed to light.

The light irradiation part may comprise: a plurality of irradiation parts for irradiating light to the object at angles different from the photographing angle at which the photographing part photographs the object; a lighting on-off control part for controlling lighting on-off of the plurality of irradiation parts; and a light patch position detection part for detecting a position of the partial light patch on the object detected by the partial light patch detection part, wherein the photographing part photographs a plurality of images while the lighting on-off control part selectively turns on and off the plurality of irradiation parts, and the information output part outputs information indicative of whether the object is a living eye or not based on positions of respective partial light patches of the plurality of images detected by the light patch position detection part.

This structure can provide a biometric identification device which does not need to provide an optical component such as a half mirror so as to be able to be mounted on a miniature authentication device just by irradiating light to an object to be identified in different angles so as to photograph images of the object in respective conditions and then comparing the positions of the partial light patches in the images.

The information output part may output information indicative of that the object is a living eye in a case where the plurality of images photographed while the lighting on-off control part selectively turns on and off the plurality of irradiation parts contain partial light patches at different positions from each other.

This structure can identify that the object is a living eye when the partial light patches are different in position from each other. Consequently, the biometric identification device has security high enough to use the photographed image for post processing such as authentication.

The biometric identification device may further comprise a pupil area detection part for detecting a pupil area from the image photographed by the photographing part, and the partial light patch detection part may determine that the image contains a partial light patch in a case where the pupil area detected by the pupil area detection part is not substantially circular.

This structure can achieve a simple biometric identification device because the presence or absence of the partial light patches can be determined based on whether the area detected as the pupil is substantially circular or not.

The partial light patch detection part may detect a partial light patch by comparing intensity histograms of the first image and the second image.

This structure can achieve a simple biometric identification device because the presence or absence of the partial light patches can be determined by comparing the intensity histograms of the images.

The authentication device of the present invention is provided with the biometric identification device of the present invention.

This structure can achieve a biometric identification device with high security because whether the photographic subject is a living eye or not can be identified either before, after or during the process of authenticating the eye of the user to be authenticated.

The authentication device may comprise: an authentication information formation part for forming predetermined authentication information from the image photographed by the photographing part when the biometric identification device has determined that the object is a living eye; a storage part for storing registered authentication information, which is previously registered; and a comparison and collation part for comparing and collating the predetermined authentication information formed by the authentication information formation part and the registered authentication information stored in the storage part.

This structure can achieve a biometric identification device with high security because the authentication process is performed when the biometric identification device has determined that the object is a living eye.

A biometric identification method of the present invention comprises: a first step of irradiating light to an object; a second step of photographing an image of the object; a third step of detecting a partial light patch from the image of the object; and a fourth step of determining that the object is a living eye when a partial light patch on the object has been detected.

This method is a biometric identification method which does not need to provide an optical component such as a half mirror so as to be able to be mounted on a miniature authentication device just by irradiating light to an object to be identified so as to photograph an image of the object and then determining whether the image contains a partial light patch or not.

Another biometric identification method of the present invention comprises: a first step of irradiating light to an object in a first direction; a second step of photographing a first image of the object; a third step of detecting a position of a first partial light patch from the first image; a fourth step of irradiating light to the object in a second direction different from the first direction; a fifth step of photographing a second image of the object; a sixth step of detecting a position of a second partial light patch from the second image; a seventh step of comparing the position of the first partial light patch and the position of the second partial light patch; and an eighth step of determining that the object is a living eye when the position of the first partial light patch and the position of the second partial light patch are different from each other.

This structure can achieve a biometric identification method which does not need to provide an optical component such as a half mirror so as to be able to be mounted on a miniature authentication device just by irradiating light to an object to be identified in different angles so as to photograph images of the object in respective conditions and then comparing the positions of the partial light patches in the images.

The biometric identification method of the present invention is characterized by identifying whether a photographic subject is a living thing or not based on the partial light patch phenomenon generated when the photographic subject is irradiated in a diagonal direction at the predetermined angle.

This method is a biometric identification method which does not need to provide an optical component such as a half mirror so as to be able to be mounted on a miniature authentication device just by using the partial light patch phenomenon generated when the object to be identified is irradiated with light.

As described hereinbefore, the present invention provides a biometric identification device which does not need to have an optical component such as a half mirror so as to be mounted on a miniature authentication device, an authentication device using it, and a biometric identification method.

### BRIEF DESCRIPTION OF THE DRAWINGS

Fig. 1 is a view to explain a partial light patch phenomenon in a first embodiment of the present invention.
Fig. 2A shows an eye image containing a partial light patch in the first embodiment of the present invention.
Fig. 2B shows another eye image containing a partial light patch in the first embodiment of the present invention.
Fig. 3 is a block diagram showing the structure of a biometric identification device of the first embodiment of the present invention.
Fig. 4 is a flowchart depicting operating steps of the biometric identification device of the first embodiment of the present invention.
Fig. 5A is a view to explain the function of a partial light patch detection part of the biometric identification device of the first embodiment of the present invention.
Fig. 5B is another view to explain the function of the partial light patch detection part of the biometric identification device of the first embodiment of the present invention.
Fig. 5C is another view to explain the function of the partial light patch detection part of the biometric identification device of the first embodiment of the present invention.
Fig. 5D is another view to explain the function of the partial light patch detection part of the biometric identification device of the first embodiment of the present invention.
Fig. 6A is a view to explain another determination processing method in the partial light patch detection part of the biometric identification device of the first embodiment of the present invention.
Fig. 6B is another view to explain the determination processing method in the partial light patch detection part of the biometric identification device of the first embodiment of the present invention.
Fig. 6C is another view to explain the determination processing method in the partial light patch detection part of the biometric identification device of the first embodiment of the present invention.
Fig. 6D is another view to explain the determination processing method in the partial light patch detection part of the biometric identification device of the first embodiment of the present invention.
Fig. 7 shows an eye image photographed with two light sources in the biometric identification device of the first embodiment of the present invention.
Fig. 8 is a flowchart depicting operating steps of a biometric identification device of a second embodiment of the present invention.
Fig. 9A is a block diagram showing the structure of a biometric identification device of a third embodiment of the present invention.
Fig. 9B is a view to show the positional relationship between the light sources and the photographing part when the biometric identification device of the third embodiment of the present invention is seen from the front.
Fig. 10 is a flowchart depicting operating steps of the biometric identification device of the third embodiment of the present invention.
Fig. 11A shows a first image photographed by the biometric identification device of the third embodiment of the present invention.
Fig. 11B shows a second image when a living eye is photographed by the biometric identification device of the third embodiment of the present invention.
Fig. 12A is a view to show a pupil area detected from the first image photographed by the biometric identification device of the third embodiment of the present invention.
Fig. 12B is a view to show a pupil area detected from the second image photographed by the biometric identification device of the third embodiment of the present invention.
Fig. 13A shows a counterfeit in the third embodiment of the present invention.
Fig. 13B shows an image of the counterfeit photographed by the biometric identification device of the third embodiment of the present invention.
Fig. 14 is a block diagram showing the structure of an authentication device of a fourth embodiment of the present invention.

### REFERENCE MARKS IN THE DRAWINGS

- 1: photographing part
- 2,50: light source
- 3: (living) eye
- 4: iris
- 7: pupil
- 8: partial light patch
- 10: eye image
- 15: control part
- 16: storage part
- 17: pupil detection part
- 18: partial light patch detection part
- 19: light patch position comparison part
- 20,30: biometric identification device
- 22: first light source
- 23: second light source
- 31: first image
- 32: second image
- 40: authentication device
- 41: clipping part
- 42: encode part
- 43: collation part
- 44: authentication information storage part
- 45: output part
- 51: counterfeit
- 60: photographic subject
- 70,71: outline
- 72: area (detected as the pupil)

### DETAILED DESCRIPTION OF PREFERRED EMBODIMENTS

Embodiments of the present invention will be described in detail as follows with reference to accompanying drawings.

### FIRST EXEMPLARY EMBODIMENT

A biometric identification device and a biometric identification method of a first embodiment of the present invention will be described as follows.

In the biometric identification device and biometric identification method of the first embodiment of the present invention, biometric identification is performed by using a phenomenon unique to living things, which is referred to as the partial light patch phenomenon. The partial light patch phenomenon described in detail later is a phenomenon in which, for example, when the pupil area of an eye is photographed, light incident on the eyeball in the direction diagonal to the photographing direction is irradiated on an area in the retina, and the area appears brighter than the remaining area of the retina.

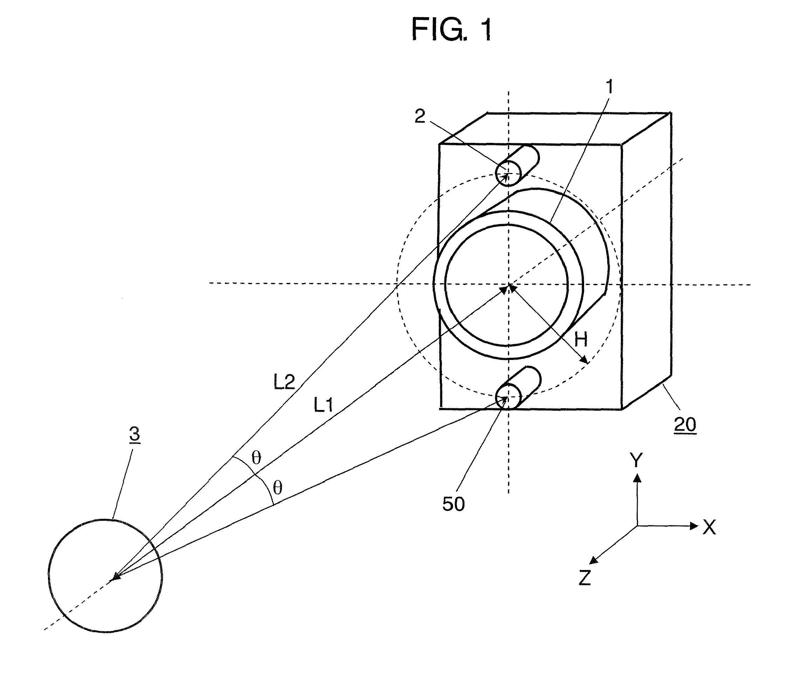

Fig. 1 is a view to explain the partial light patch phenomenon in the first embodiment of the present invention. As shown in Fig.1, biometric identification device 20 is disposed so that photographing part 1 can be in front of living eye 3. Light source 2, which is the light irradiation part, is disposed so as to be at distance H from the optical axis center of photographing part 1 and also to be right above the optical axis center when seen from the photographic subject. Light source 2 is irradiated to eye 3 in such a manner that photographing axis L1 connecting the optical axis center of photographing part 1 and the eyeball center in eye 3, and straight line L2 connecting light source 2 and the eyeball center in eye 3 can form a predetermined angle θ therebetween at which the partial light patch phenomenon is generated. The value of the predetermined angle θ differs depending on the types or the like of the optical system and light source used for the photography. As an example, when the predetermined angle has an absolute value of not less than about 1 degree nor more than 2.5 degrees, the partial light patch phenomenon can be easily generated. However, the present invention does not limit the predetermined angle θ to its absolute value, and all the possible positions of light source 2 to generate the partial light patch phenomenon in the biometric identification device and the biometric identification method are included in the present invention.

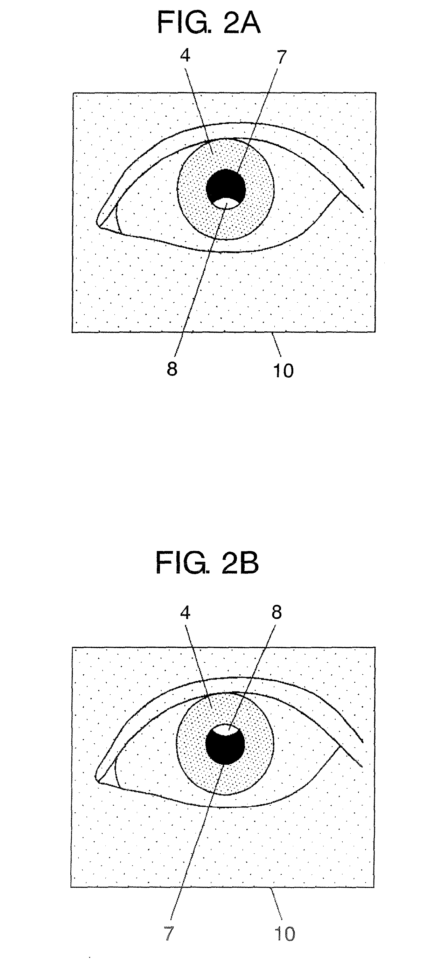

When the light emitted from light source 2 is irradiated to living eye 3 under such conditions, eye image 10 of eye 3 photographed by photographing part 1 contains a partial light patch. Fig. 2 shows eye images each containing a partial light patch in the first embodiment of the present invention. When light source 2 shown in Fig. 1 is used for irradiation, the bottom area of pupil 7 in eye image 10 shown in Fig. 2A appears brighter than the remaining area in eye image 10. This is because the light which is emitted from light source 2 and is irradiated on an area of the retina makes the area appear brighter than the remaining area of the retina. Hereinafter, the high-intensity area in pupil 7 is referred to as partial light patch 8. Partial light patch 8 can be generated by disposing light source 2 in such a manner as to make the aforementioned angle θ be within a predetermined range. For example, light source 2 can be placed in an arbitrary position on the circumference at distance H from the optical axis center of photographing part 1 shown in Fig.1, and may be in the position of light source 50 shown in Fig. 1, which is right below the optical axis center of the photographing part when seen from the photographic subject.

Fig.2B shows partial light patch 8 generated in eye image 10 by light source 50 shown in Fig.1. As shown in Fig.2B, partial light patch 8 is generated in the top area of pupil 7 opposite to the case shown in Fig.2A.

As shown in Figs.2A and 2B, partial light patch 8 varies in position in accordance with the distances and angles of light sources 2 and 50 from the optical axis center of photographing part 1.

Thus, the present invention identifies whether the photographic subject is a living eye or a counterfeit by making use of the partial light patch phenomenon unique to living things.

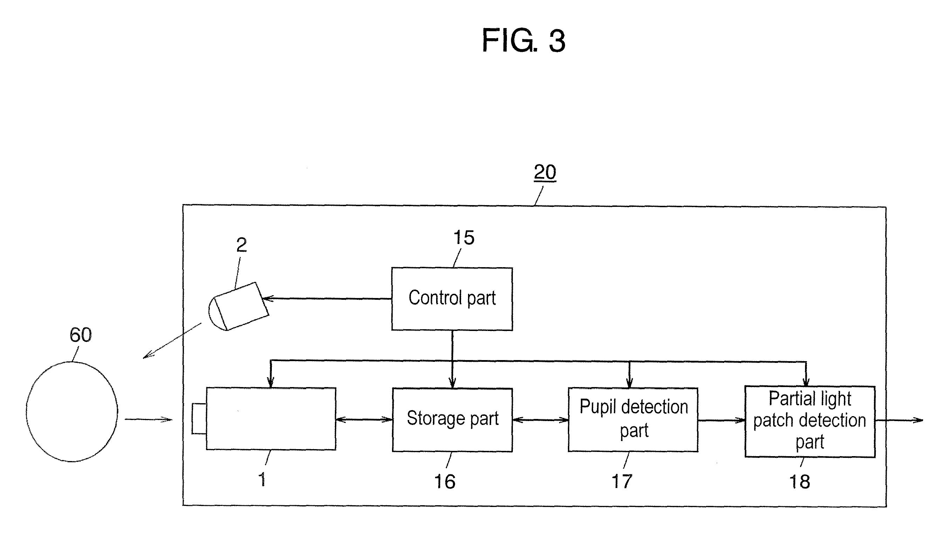

The following is a description of the structure of biometric identification device 20 of the first embodiment of the present invention. Fig.3 is a block diagram showing the structure of biometric identification device 20 of the first embodiment of the present invention.

As shown in Fig.3, biometric identification device 20 includes photographing part 1 which is disposed to satisfy the aforementioned predetermined relationship with photographic subject 60 so as to photograph photographic subject 60; light source 2 which irradiates photographic subject 60; storage part 16 which stores eye image 10 photographed by photographing part 1; pupil detection part 17, which is the aforementioned pupil area detection part, and detects the image of pupil 7 from eye image 10 stored in storage part 16; partial light patch detection part 18 which detects partial light patch 8 from the image of pupil 7 detected by pupil detection part 17 and also functions as the aforementioned information output part which outputs a signal indicative of whether photographic subject 60 is living eye 3 or a counterfeit; and control part 15 which controls the operations of light source 2, photographing part 1, storage part 16, pupil detection part 17 and partial light patch detection part 18.

As light source 2, well-known devices such as a light-emitting diode can be used, and it is more preferable to use a highly directional light source in order to facilitate the generation of partial light patch 8. The wavelength of light source 2 can be selected arbitrarily, and it is preferable to select a light source which generates light in the invisible region of the spectrum so as not to stimulate living eye 3. When biometric identification device 20 is mounted on an iris recognition device as will be described later, it is preferable to use a light source generating light in the near-infrared wavelength region (700 to 1000 nm) because it can also function as the light source for lighting in order to obtain iris images with excellent contrast. In view of the cost, it is possible to use a light source which is easily available and is in the visible wavelength region such as xenon flash. In that case, however, intensity reduction and some other attention are necessary not to make the user to be authenticated uncomfortable.

Photographing part 1 can be selected from well-known camera devices that can photograph partial light patch 8 and output its image. More specifically, with light source 2 emitting visible light, a camera device capable of photographing objects in the visible region can be used, whereas with light source 2 emitting near-infrared light, a camera device capable of photographing objects in the near-infrared region can be used.

Storage part 16 can be selected from well-known storage media such as RAMs and EPROMs as long as it can store images temporarily.

The functions of pupil detection part17 and partial light patch detection part 18 can be either realized by software or achieved by hardware by designing a dedicated circuit.

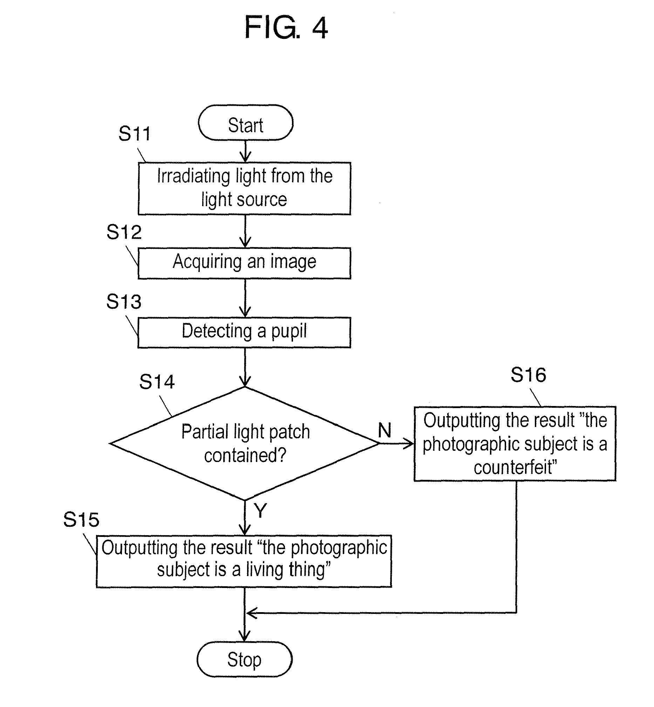

With reference to Fig.4, the operation of biometric identification device 20 of the first embodiment of the present invention will be described as follows. Fig.4 is a flowchart depicting the operating steps of biometric identification device 20 of the first embodiment of the present invention.

Firstly, control part 15 makes light source 2 begin to irradiate light to eye 3 (S11). Then, control part 15 makes photographing part 1 photograph an image of eye 3, that is, eye image 10 (S12). Eye image 10 thus photographed is stored in storage part 16.

Next, pupil detection part 17 clips the area of pupil 7 from eye image 10 stored in storage part 16 (S13). This clipping process of the area of pupil 7 from eye image 10 by pupil detection part 17 can be performed by a well-known method, e.g. by binarizing eye image 10 and extracting the area having the lowest intensity.

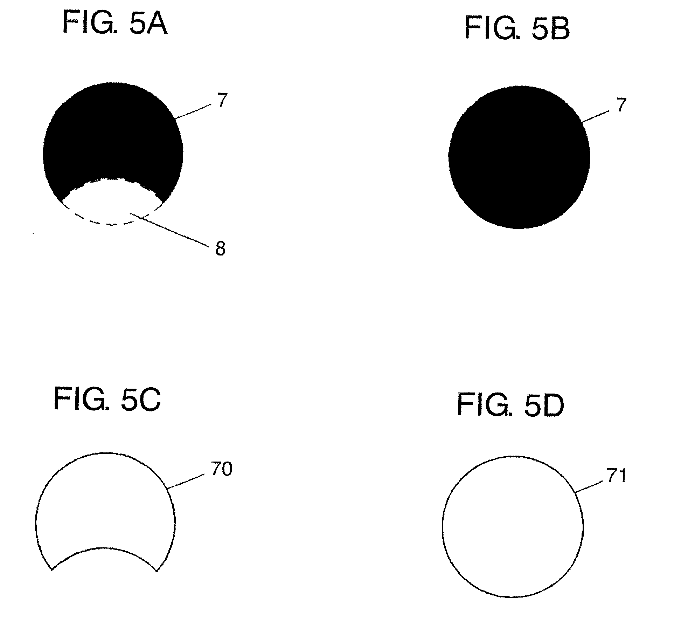

Then, partial light patch detection part 18 determines whether the image of pupil 7 detected by pupil detection part 17 contains partial light patch 8 or not (S14). This determination can be performed, e.g. by checking whether the area detected as pupil 7 by pupil detection part 17 is circular or not. When the area detected as pupil 7 is circular, it is believed that pupil 7 does not contain partial light patch 8. On the other hand, when the area detected as pupil 7 is not circular, it is believed that pupil 7 contains partial light patch 8. A method for determining whether the area detected as pupil 7 by pupil detection part 17 is circular or not by partial light patch detection part 18 will be described as follows with reference to Fig.5.

Fig.5 shows views to explain the function of partial light patch detection part 18 of the biometric identification device 20 of the first embodiment of the present invention. Here,assume that Figs. 5A and 5B show the areas detected as pupil 7. Partial light patch detection part 18 extracts outlines 70 and 71 of the areas detected as pupil 7 as shown in Figs. 5C and 5D, respectively. Then, partial light patch detection part 18 determines whether outlines 70 and 71 are circular or not based on the coordinates indicating outlines 70 and 71 of the areas detected as pupil 7. In Fig.5C, the outline coordinates are not circular, that is, are not on the circumference. Therefore, pupil 7 is determined to contain partial light patch 8.

On the other hand, when the area detected as pupil 7 by pupil detection part 17 is as shown in Fig.5B, outline 71 of the area detected as pupil 7 is extracted and formed circular as shown in Fig.5D. In this case, since the outline coordinates are circular, partial light patch detection part 18 determines that pupil 7 contains partial light patch 8. It is preferable that slightly flattened circles and ovals be determined as circles because in general, pupil 7 is not a complete circle.

Note that in the present invention the aforementioned method is not the only determination processing method for determining whether the area detected as pupil 7 by pupil detection part 17 is circular or not.

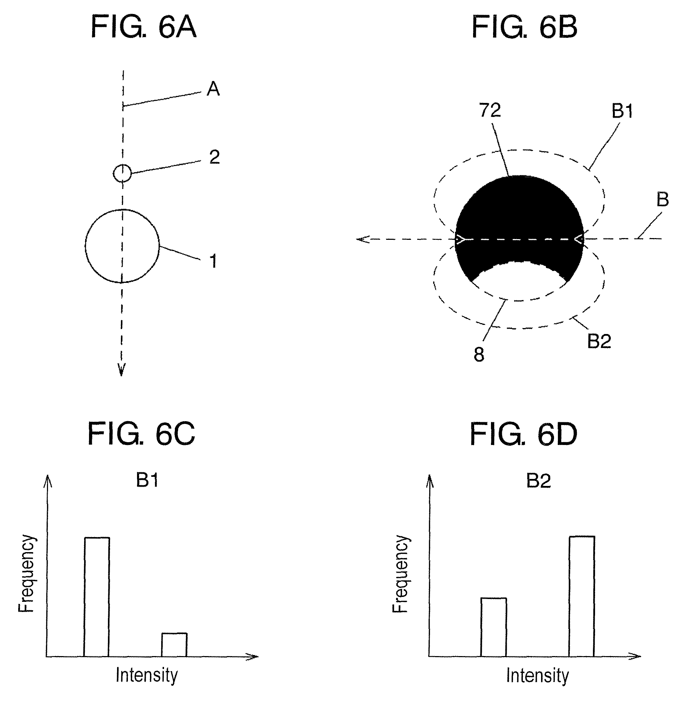

Fig.6 shows views to explain another determination processing method by partial light patch detection part 18 of biometric identification device 20 of the first embodiment of the present invention. As shown in Figs.6A and 6B, area 72 detected as pupil 7 is divided into two parts by straight line B which passes through the presumed center of area 72 when area 72 is regarded as circular and which is in the (horizontal) direction orthogonal to direction A connecting light source 2 and photographing part 1 (in the up and down direction in Figs. 6A and 6B). Then, the intensity histograms of the two parts are calculated and compared to determine the presence or absence of partial light patch 8. More specifically, as shown in Fig. 6B, area 72 detected as pupil 7 is regarded as circular, and the upper semicircle on line B is made region B1 and the lower semicircle under line B is made region B2 to form the intensity histograms of regions B1 and B2. The intensity histogram of region B1 is shown in Fig.6C, and the intensity histogram of region B2 is shown in Fig. 6D. As shown in Fig. 6C, region B1, which is the upper side of area 72 detected as pupil 7 has a high frequency of low intensity, and in contrast, region B2, which is the lower side of area 72 has a high frequency of high intensity, thus showing contrasting intensity histograms having different tendencies. On the other hand, when the area detected as pupil 7 does not contain partial light patch 8, regions B1 and B2 do not show a large difference in intensity histogram values. This feature can be used to determine that area 72 detected as pupil 7 does not contain partial light patch 8. Regions B1 and B2, which have been compared in terms of intensity histogram values in this manner, could be compared instead in terms of the average intensity values so as to determine the presence or absence of partial light patch 8.

Going back to Fig. 4, partial light patch detection part 18 determines the presence or absence of partial light patch 8 in the aforementioned method. When eye image 10 has been determined to contain partial light patch 8, photographic subject 60 is likely to be living eye 3. Therefore, partial light patch detection part 18 outputs a signal indicative of that photographic subject 60 is a living thing and terminates the process (S15). On the other hand, when eye image 10 has been determined not to contain partial light patch 8, photographic subject 60 is likely to be a counterfeit, not living eye 3. Therefore, partial light patch detection part 18 outputs a signal indicating this and terminates the process (S16).

The signal from partial light patch detection part 18 indicative of whether photographic subject 60 is a living thing or not (a counterfeit) may be designed to be transmitted to various information devices connected externally such as an authentication device, and when the signal indicates that photographic subject 60 is a counterfeit, the user of the information device may be warned on the screen or the like, or the signal may be transmitted to a warning device externally connected to sound an alarm.

As described above, biometric identification device 20 of the first embodiment of the present invention can positively identify whether photographic subject 60 is living eye 3 or a counterfeit just by disposing light source 2 and photographing part 1 in such a manner as to have the predetermined relationship with photographic subject 60.

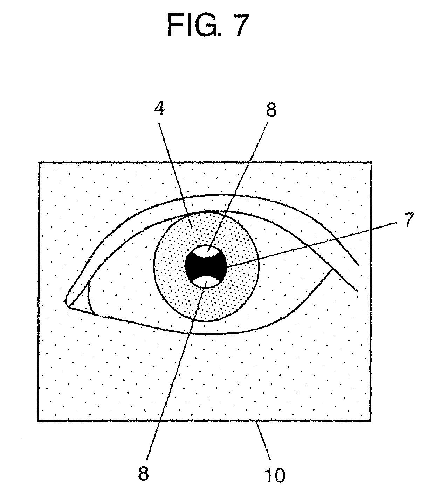

Although the first embodiment of the present invention is provided with single light source 2, the biometric identification device and the biometric identification method of the present invention do not limit the number of light sources. For example, as shown in Fig.1, two light sources 2 and 50 may be provided. Fig.7 shows eye image 10 photographed with two light sources 2 and 50 in biometric identification device 20 of the first embodiment of the present invention. In this structure, while light sources 2 and 50 are both turned on, as shown Fig.7, eye image 10 contains two partial light patches 8; one in the top and the other in the bottom of pupil 7, so that partial light patch determination part 18 can determine from the presence or absence of two partial light patches 8 whether photographic subject 60 is living eye 3 or not.

### SECOND EXEMPLARY EMBODIMENT

A biometric identification device and a biometric identification method of a second embodiment of the present invention will be described as follows. The biometric identification device of the second embodiment of the present invention has the same structure as biometric identification device 20 of the first embodiment except for its operation, which will be described below.

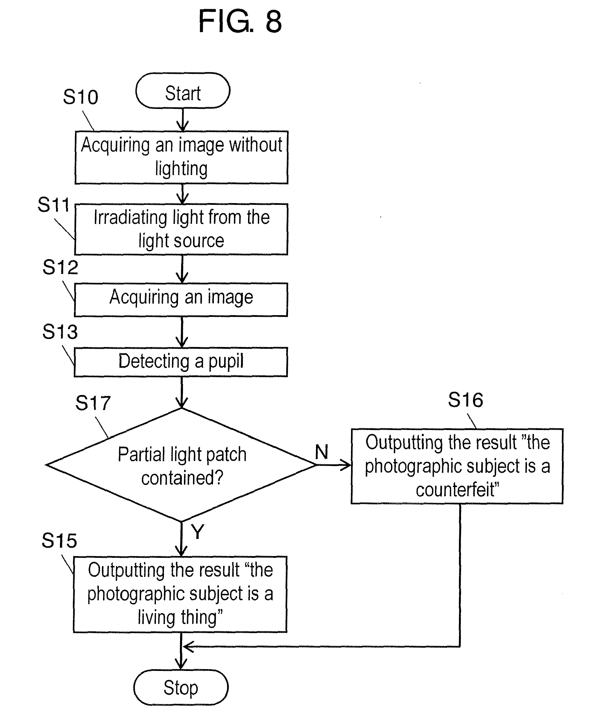

Fig.8 is a flowchart depicting operating steps of biometric identification device 20 of the second embodiment of the present invention. As shown in Fig. 8, biometric identification device 20 of the second embodiment of the present invention operates differently in two respects from biometric identification device 20 of the first embodiment shown in Fig. 4 as follows. For one thing, the present embodiment, prior to the light irradiation from light source 2, has a step of acquiring an image either in the absence of light or in the light emitted from light source 2 positioned not to generate partial light patch 8 (e.g., far from distance H shown in Fig. 1) (S10). For the other thing, the present embodiment detects the presence or absence of partial light patch 8 by partial light patch detection part 18 (S17) differently from the first embodiment.

Firstly, photographing part 1 photographs an image of photographic subject 60 in the absence of lighting or in the light emitted from light source 2 positioned not to generate partial light patch 8 (S10). Steps S11 to S13, and Steps S15 and S16 are identical to those in the first embodiment, so that their description is not repeated here.

After Step S13 is over, partial light patch determination part 18 compares the image of photographic subject 60 photographed at Step S10 with the image of photographic subject 60 photographed at Step S12 in the light emitted from light source 2 (S17). When photographic subject 60 is living eye 3, the intensity value of the image photographed at Step S10 not containing partial light patch 8 can be compared with the intensity value of the image photographed at Step S12 containing partial light patch 8 so as to detect regions which are greatly different in intensity from each other, thereby determining that the image photographed at Step S12 contains partial light patch 8.

On the other hand, when photographic subject 60 is not living eye 3 but a counterfeit, neither the image photographed at Step S10 nor the image photographed at Step S12 contain partial light patch 8. Therefore, the comparison in intensity between these images does not detect regions which are greatly different in intensity from each other, making it possible to determine that the image photographed at Step S12 does not contain partial light patch 8.

This biometric identification method of the second embodiment of the present invention can positively identify whether photographic subject 60 is living eye 3 or not as in the biometric identification device and the biometric identification method of the first embodiment.

In the second embodiment of the present invention, the time between the photographing at Step S10 and the photographing at Step S12 can be made as short as possible, e.g. less than about 1 second to prevent the fraud from having time for impersonation, thereby securing the recognition of the counterfeit. Furthermore, the more number of times images are photographed at Steps S10 and S12, the less likely it is that the fraud performs impersonation.

### THIRD EXEMPLARY EMBODIMENT

A biometric identification device and a biometric identification method of a third embodiment of the present invention will be described as follows.

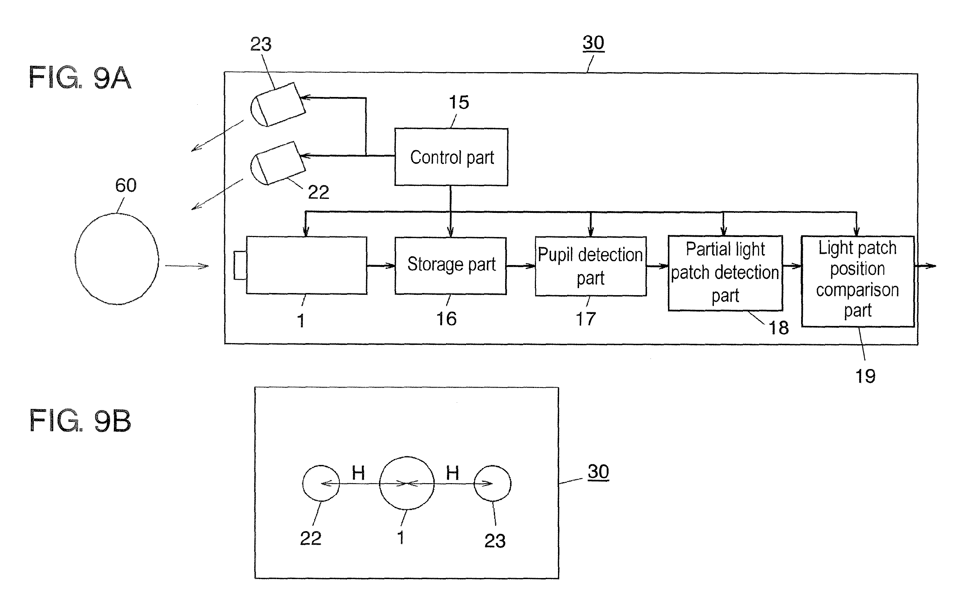

Fig. 9A is a block diagram showing the structure of biometric identification device 30 of the third embodiment of the present invention, and Fig.9B is a view to show the positional relationship between first and second light sources 22, 23 and photographing part 1 when biometric identification device 30 of the third embodiment of the present invention is seen from the front.

As shown in Fig.9A, biometric identification device 30 of the third embodiment of the present invention is provided with two light sources: first light source 22 and second light source 23, which are the aforementioned irradiation parts. First light source 22 and second light source 23 are disposed in such a manner that as shown in Fig.9B their centers are in the aforementioned predetermined distance H from the optical axis center of photographing part 1.

The operation of biometric identification device 30 of the third embodiment of the present invention will be described as follows.

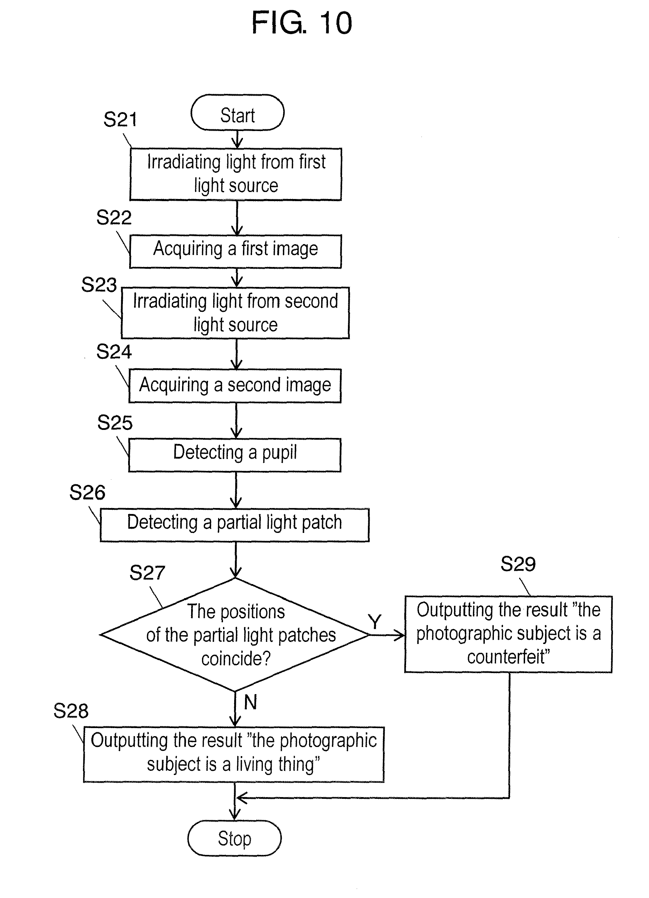

Fig. 10 is a flowchart depicting operating steps of biometric identification device 30 of the third embodiment of the present invention.

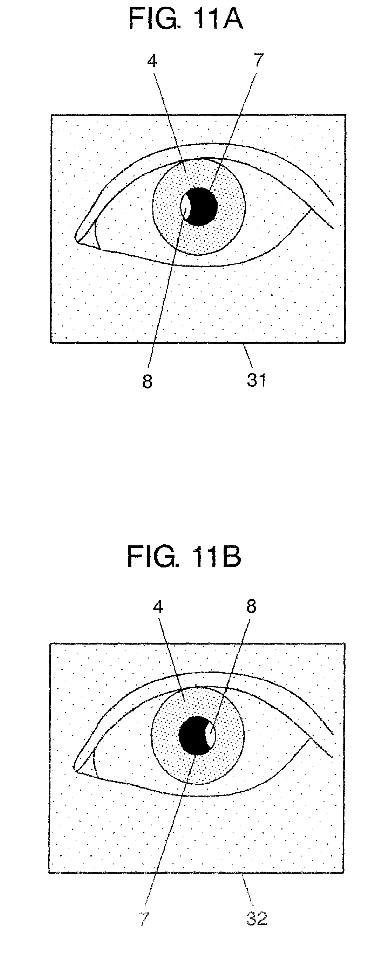

Firstly, control part 15, which is the aforementioned lighting on-off control part, turns on first light source 22 (S21), and makes photographing part 1 photograph an image of photographic subject 60 (hereinafter, first image) (S22). When the photographing is over, control part 15 turns off first light source 22. First image 31 obtained by photographing living eye 3 is shown in Fig. 11A. Fig. 11A shows first image 31 photographed by biometric identification device 30 of the third embodiment of the present invention. As shown in Fig. 11A, pupil 7 contains partial light patch 8 at its left side.

Next, control part 15 turns on second light source 23 (S23), and makes photographing part 1 photograph an image (hereinafter, second image) (S24). When the photographing is over, control part 15 turns off second light source 23. Fig.11B shows second image 32 when living eye 3 is photographed by biometric identification device 30 of the third embodiment of the present invention. As shown in Fig.11B, pupil 7 contains partial light patch 8 on its right side. First and second images 31 and 32 photographed at Steps S22 and S24, respectively, are stored in storage part 16. The time between the photographing of first image 31 and the photographing of second image 32 can be made as short as possible to prevent the fraud from having time for impersonation, thereby providing biometric identification device 30 with a more reliable structure. In the present embodiment, similar to the second embodiment, the more number of times images are photographed at Steps S22 and 24, the less likely it is that the fraud performs impersonation.

Next, pupil detection part 17 detects the area of pupil 7 from each of first image 31 and second image 32 in the same manner as described in the first embodiment (S25).

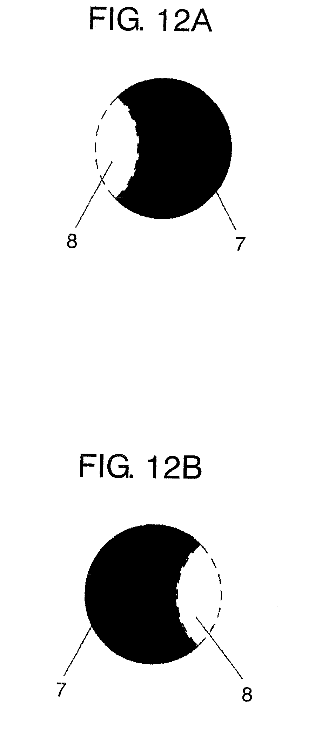

Then, partial light patch detection part 18, which is the aforementioned light patch position detection part, detects partial light patch 8 from pupil 7 of each of first and second images 31 and 32 in the same manner as in the first embodiment, and outputs the position of partial light patch 8 in pupil 7 to light patch position comparison part 19 (S26). Fig. 12A is a view to show the area of pupil 7 detected from first image 31 photographed by biometric identification device 30 of the third embodiment of the present invention, and Fig. 12B is a view to show the area of pupil 7 detected from second image 32 photographed by biometric identification device 30 of the third embodiment of the present invention.

When the area of pupil 7 is extracted from first image 31 shown in Fig.11A, partial light patch 8 appears on the left side of pupil 7 as shown in Fig.12A. On the other hand, when the area of pupil 7 is extracted from second image 32 shown in Fig. 11B, partial light patch 8 appears on the right side of pupil 7 as shown in Fig.12B.

Light patch position comparison part 19 compares partial light patches 8 contained in the two images detected by partial light patch detection part 18 and determines whether partial light patches 8 coincide in position or not (S27).

In the images shown in Figs.11A and 11B, partial light patches 8 are in different positions from each other, and in such a case, light patch position comparison part 19 outputs a signal indicative of that photographic subject 60 is living eye 3.

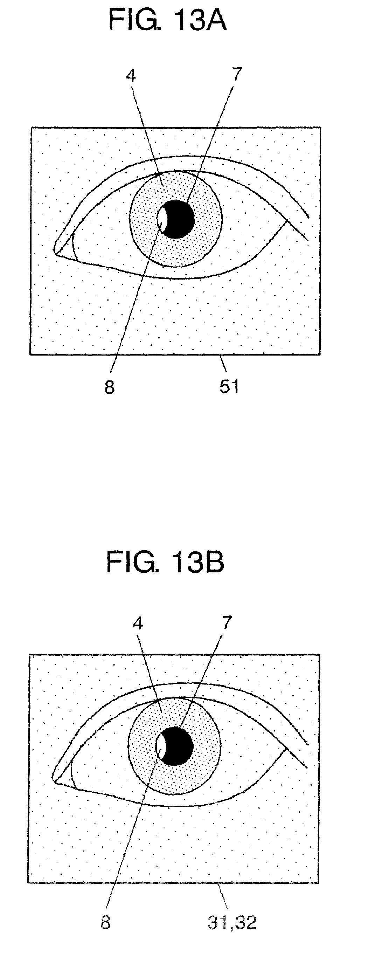

On the other hand, when a malicious third party creates counterfeit 51 of an eye which contains partial light patch 8 as shown in Fig.13A, both first and second images 31 and 32 photographed by changing the light sources contain partial light patch 8 in the same position as shown in Fig. 13B. Consequently, light patch position comparison part 19 outputs a signal indicative of that photographic subject 60 is not living eye 3 (but is counterfeit 51). Fig.13A shows counterfeit 51 in the third embodiment of the present invention, and Fig.13B shows an image of counterfeit 51 photographed by biometric identification device 30 of the third embodiment of the present invention.

The signal from light patch position comparison part 19 indicative of whether photographic subject 60 is a living thing or not (a counterfeit) maybe designed to be transmitted to various information devices connected externally such as an authentication device so that the user of the information device can be warned on the screen or the like, or the signal may be transmitted to a warning device externally connected to sound an alarm.

As described above, biometric identification device 30 of the third embodiment of the present invention can positively identify whether photographic subject 60 is living eye 3 or counterfeit 51 just by disposing first and second light sources 22, 23 and photographing part 1 in such a manner as to have the predetermined relationship with photographic subject 60.

Biometric identification device 30 of the third embodiment of the present invention has security high enough not to allow a malicious third party to perform identity theft using counterfeit 51 of an eye image containing partial light patch 8 as shown in Fig.12A.

In the third embodiment of the present invention, whether photographic subject 60 is living eye 3 or not is identified by comparing the positions of partial light patches 8 by light patch position comparison part 19; however, the biometric identification device of the present invention can identify it in other ways. For example, whether photographic subject 60 is living eye 3 or not can be identified by calculating the intensity histograms of pupils 7 of first and second images 31 and 32 described in the first embodiment. When both pupils 7 have the same intensity histogram, photographic subject 60 is determined to be counterfeit 51, and when pupils 7 have different intensity histograms, photographic subject 60 is determined to be living eye 3.

Biometric identification device 30 of the third embodiment of the present invention is provided with the two light sources; however, the biometric identification device of the present invention does not limit the number of the light sources. For example, four light sources may be provided on concentric circles.

Although single first light source 22 and single second light source 23 are provided in the third embodiment of the present invention, each of these light sources may be two or more.

### FOURTH EXEMPLARY EMBODIMENT

As a fourth embodiment of the present invention, an authentication device of the present invention will be described as follows.

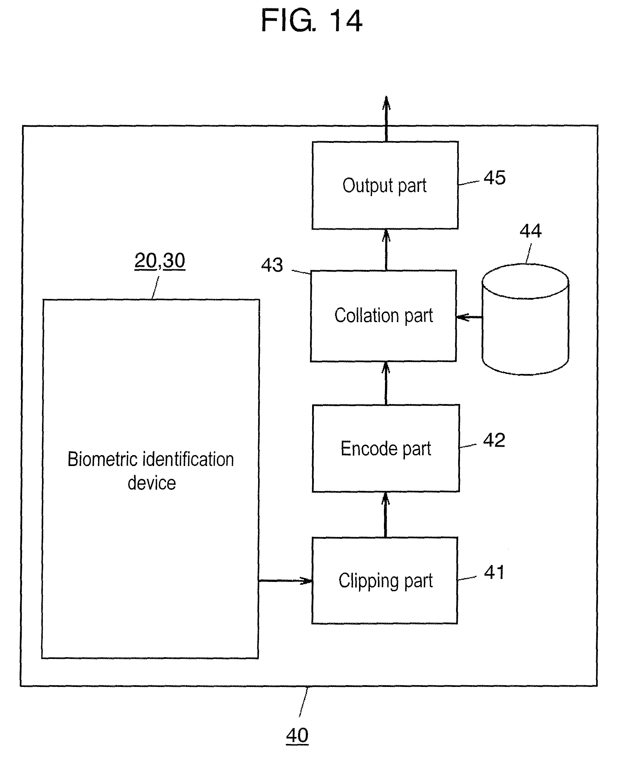

Fig.14 is a block diagram showing the structure of authentication device 40 of the fourth embodiment of the present invention.

As shown in Fig. 14, authentication device 40 of the fourth embodiment of the present invention is provided with biometric identification device 20 or 30 described in each of the first to third embodiments. Authentication device 40 of the fourth embodiment of the present invention includes clipping part 41 which extracts and clips iris 4 from eye image 10 determined to be living eye 3 by biometric identification device 20 or 30 and stored in storage part 16; encode part 42 which is an authentication information formation part for forming authentication information by encoding the clipped image in a predetermined manner; authentication information storage part 44 which stores registered authentication information of registered users; collation part 43 which is the aforementioned comparison and collation part for comparing and collating the authentication information formed by encode part 42 and the registered authentication information stored in authentication information storage part 44; and output part 45 which outputs the results collated by collation part 43.

How to clip images by clipping part 41, to encode images by encode part 42, and to collate authentication information by collation part 43 can be, for example, the same as described in Patent Document 1 mentioned earlier.

With the aforementioned structure, authentication device 40 of the fourth embodiment of the present invention can perform user authentication by forming authentication information from an iris pattern extracted from an image of photographic subject 60 which has been determined to be living eye 3 by biometric identification device 20 or 30. Thus, authentication device 40 has high security with low risk of frauds.

The fourth embodiment of the present invention has described the structure of an authentication device using the authentication information obtained by encoding the iris area of an eye image. However, the authentication device of the present invention is not limited to such an authentication device using authentication information obtained from the iris, but can be an authentication device using other biometrics information about living eyes, such as blood vessel pattern on the back of the eye.

### INDUSTRIAL APPLICABILITY

The biometric identification device, authentication device using it and biometric identification method of the present invention, which do not need to provide an optical component such as a half mirror so as to be able to be mounted on a miniature authentication device, are useful as a biometric identification device for identifying whether an object is a living thing or not, and an authentication device using it, and biometric identification method, respectively.

## Claims

1. A biometric identification device for identifying whether an object is a living eye or not, comprising:
a photographing part for photographing the object;
a light irradiation part for irradiating light to the object at an angle different from a photographing angle at which the photographing part photographs the object;
a partial light patch detection part for detecting a partial light patch on the object from an image photographed by the photographing part; and
an information output part for outputting information indicative of whether the object is a living eye or not based on whether the partial light patch detection part has detected a partial light patch from the object.

2. The biometric identification device of claim 1, wherein
the information output part outputs the information indicative of that the object is a living eye when the partial light patch detection part has detected a partial light patch on the object.

3. The biometric identification device of claim 2, wherein
the photographing part photographs a first image while the object is irradiated by the light irradiation part, and a second image while the object is not irradiated by the light irradiation part; and
the partial light patch detection part compares the first image and the second image, thereby detecting the partial light patch on the object from the image photographed by the photographing part.

4. The biometric identification device of claim 2, wherein
the light irradiation part comprises:
a plurality of irradiation parts for irradiating light to the object at angles different from the photographing angle at which the photographing part photographs the object;
a lighting on-off control part for controlling lighting on-off of the plurality of irradiation parts; and
a light patch position detection part for detecting a position of the partial light patch on the object detected by the partial light patch detection part, wherein
the photographing part photographs a plurality of images while the lighting on-off control part selectively turns on and off the plurality of irradiation parts, and
the information output part outputs information indicative of whether the object is a living eye or not based on positions of respective partial light patches of the plurality of images detected by the light patch position detection part.

5. The biometric identification device of claim 4, wherein
the information output part outputs information indicative of that the object is a living eye in a case where the plurality of images photographed while the lighting on-off control part selectively turns on and off the plurality of irradiation parts contain partial light patches at different positions from each other.

6. The biometric identification device of claim 2 further comprising a pupil area detection part for detecting a pupil area from the image photographed by the photographing part, and
the partial light patch detection part determines that the image contains a partial light patch in a case where the pupil area detected by the pupil area detection part is not substantially circular.

7. The biometric identification device of claim 3, wherein
the partial light patch detection part detects a partial light patch by comparing intensity histograms of the first image and the second image.

8. An authentication device provided with the biometric identification device of claim 1.

9. The authentication device of claim 8 comprising:
an authentication information formation part for forming predetermined authentication information from the image photographed by the photographing part when the biometric identification device has determined that the object is a living eye;
a storage part for storing registered authentication information, which is previously registered; and
a comparison and collation part for comparing and collating the predetermined authentication information formed by the authentication information formation part and the registered authentication information stored in the storage part.

10. A biometric identification method comprising:
a first step of irradiating light to an object;
a second step of photographing an image of the object;
a third step of detecting a partial light patch from the image of the object; and
a fourth step of determining that the object is a living eye when a partial light patch on the object has been detected.

11. A biometric identification method comprising:
a first step of irradiating light to an object in a first direction;
a second step of photographing a first image of the object;
a third step of detecting a position of a first partial light patch from the first image;
a fourth step of irradiating light to the object in a second direction different from the first direction;
a fifth step of photographing a second image of the object;
a sixth step of detecting a position of a second partial light patch from the second image;
a seventh step of comparing the position of the first partial light patch and the position of the second partial light patch; and
an eighth step of determining that the object is a living eye when the position of the first partial light patch and the position of the second partial light patch are different from each other.
